# EUROPEAN PATENT SPECIFICATION

(11) **EP 1 206 192 B1**
(45) Date of publication and mention of the grant of the patent: **01.12.2004**
(21) Application number: 00952062.8
(22) Date of filing: 01.08.2000
(51) Int. Cl.: A23C 9/127

(54) **METHOD FOR PREPARING A FERMENTED PRODUCT**
VERFAHREN ZUR HERSTELLUNG EINES GÄRUNGSPRODUKTS
PROCEDE DE PRODUCTION D'UN PRODUIT FERMENTE

(30) Priority: 04.08.1999 NL 1012775
(43) Date of publication of application: 22.05.2002
(73) Proprietor: Friesland Brands B.V., 8937 AC Leeuwarden (NL)
(72) Inventor: JONKMAN, Margrethe, Jeanette, NL-7412 AX Deventer (NL); ZOON, Pieternella, NL-6708 NA Wageningen (NL); DE KRUIF, Cornelis, Gijsbertus, NL-3931 KK Woudenberg (NL); VAN DEN BOOGAARD, Cornelis, NL-7213 BW Gorssel (NL)
(74) Representative: Prins, Adrianus Willem, Mr. Ir.
(86) International application number: PCT/NL2000/000551
(87) International publication number: WO 2001/010232

(56) References cited:
- EP-A- 0 521 166
- EP-A- 0 610 649
- EP-A- 0 642 740
- WO-A-93/19610

## Description

The invention relates to a method for the preparation of a fermented product, in particular a fermented dairy product, wherein a step is carried out in which milk proteins are mutually crosslinked under the influence of a suitable enzyme. Moreover, the invention relates to the use of protein-crosslinking enzyme to obtain an improved or even new type of fermented dairy product.

European patent application 0 610 649, in the name of Ajinomoto Co., Inc., describes a method for the preparation of yoghurt, wherein a starting material containing milk protein, for instance milk, is pretreated for 10-120 minutes with transglutaminase (TGase) at a pH of 6-7 and a temperature of preferably 40-55°C, subsequently the enzyme is deactivated. Then a suitable starter culture is added to the starting material treated with TGase, after which yoghurt is prepared in an otherwise known manner. As advantage of this method, the prevention of water (or whey) separation is mentioned, while the texture of the intended yoghurt product is maintained.

In the product brochure "transglutaminase/yoghurt" by Ajinomoto, the applicants of the above European patent application, this method is also described. It is indicated that TGase can also increase the firmness and viscosity of yoghurt. To this end, TGase must be added to milk or a reconstituted milk solution. Subsequently, pasteurization takes place, in which TGase is deactivated, after which a starter culture is added. Depending on the intended type of yoghurt, subsequently first filling the containers and then fermentation or first a fermentation step and then filling are carried out.

EP-A-0 642 740 discloses a method for making a plain yoghurt, which comprises adding lactoperoxidase to a yoghurt mix start product which has been pasteurized at 90 °C, and fermenting this mixture upon adding a lactic acid bacteria starter.

In EP-A-0 521 166, a method is disclosed for making yoghurt, which comprises inoculating a lactic acid bacteria starter containing lactoperoxidase to sterilized milk.

WO-A-93/19610 teaches a method for making yoghurt, which comprises adding transglutaminase to heat treated milk and fermenting this mixture upon adding a yoghurt starter culture.

It is generally known that as regards the method of preparation yoghurt can be substantially classified into the types of set-type yoghurt and stirred yoghurt. The most important difference in these methods of preparation is that in the case of set-type yoghurt the milk inoculated with yoghurt starter is packaged next to the inoculating step and then acidified in the package, while in the case of stirred yoghurt the acidified milk is stirred and then packaged.

More in detail, for the preparation of whole yoghurt a standardized milk is conventionally homogenized, for instance at a temperature of 55°C and 20 MPa, which step can be omitted in the preparation of low-fat yoghurt, then pasteurized (for instance 5 minutes at 85°C), cooled to about 45°C (set-type yoghurt) /30-32°C (stirred yoghurt) and inoculated with a suitable starter. Subsequently, to prepare a set-type yoghurt the inoculated composition is packaged, incubated for some tine, and then cooled. To prepare a stirred yoghurt, the inoculated composition is first incubated, subsequently stirred, then cooled to a temperature of 6°C and packaged or first packaged and then cooled.

In the above product brochure by Ajinomoto it is stated that for stirred yoghurt the following advantages are attributed to the use of TGase: increased viscosity, optimized thickening and improved rheological stability; less stabilizer is sufficient. Moreover, a yoghurt with a lower fat content or a lower fat-free dry matter content can be prepared with the body and structure of a fatter yoghurt or a yoghurt with a higher fat-free dry matter content. For set-type yoghurt it is indicated that a greater firmness is obtained besides decreased serum separation and texture improvement of less fat yoghurt.

Yoghurt is a visco-elastic material; it is a gel. By stirring, the gel is broken, after which the viscous character prevails. Stirred yoghurt has thus become a liquid, the viscosity of which strongly decreases with increasing velocity gradient. It is an improper thixotropic product, the viscosity of which only increases little after the stirring step. A gel is no longer formed.

Conventional set-type yoghurt and stirred yoghurt differ substantially in consistency. Set-type yoghurt is a gel; its firmness is often determined by lowering therein a ball of a specific weight and specific diameter for a specific time. The reciprocal of the penetration depth is a measure of the firmness. This firmness value does not depend on the modulus of elasticity only; the viscosity also contributes. A drawback of set-type yoghurt is that it often shows serum separation; this problem already occurs immediately after preparation, but certainly when it is stirred or scooped out. Stirred yoghurt must be pourable and rather viscous. The (apparent) viscosity is often determined after stirring therein in a standardized manner under well-defined test conditions. A problem manifesting itself in the case of stirred yoghurt is designated by the term "sagging". Sagging is caused, inter alia, by a relatively low viscosity. Besides, continued acidification is a problem. These problems are inherent to the process used for the preparation.

In the Bulletin of the IDF 332, pages 47-53, Lorenzen and Schlimme, in an article entitled "Properties and potential fields of application of transglutaminase preparations in dairying", describe the effect of crosslinking of casein molecules on the texture of yoghurt. In this article, too - like, for that matter, in the article "Pilot studies on the effect of enzymatic crosslinking in dairying" by the same authors in Kieler Milchwirtschaftliche Forschungsberichte 49(3) 221-227 (1997) - standardized milk is first treated with TGase for 2 hours at 37°C, after which the enzyme is deactivated in a heating step. Subsequently, the treated composition is acidified. It was found that in the method described, which can typically be designated as method for the preparation of a set-type yoghurt, the gel firmness of the resulting yoghurt was greater and syneresis occurred less.

The present inventors have intensively studied the methods according to the above European patent application 0 610 649, the above product brochure by Ajinomoto and the publications by Lorenzen and Schlimme and found that the alleged advantages can only be maintained if the yoghurt product is a set-type yoghurt.

More in detail, it has been found that when a stirred yoghurt is prepared using the known method according to the above European patent application and both articles a product with, true, a firmer yoghurt gel is obtained after the fermentation step, but that after the stirring step the viscosity of the yoghurt had hardly, if it all, increased in comparison with a yoghurt prepared from a milk not treated with TGase but otherwise identical and/or that gel lumps were present and the product in general had a rougher appearance than the stirred yoghurt prepared from the untreated milk. The gel lumps could be broken by very vigorously stirring the yoghurt or by pressing it through a slit. This, however, leads to a disadvantageous effect on the viscosity, in particular when a low-fat yoghurt was intended.

According to the present invention it has now been found surprisingly that when an enzyme which causes proteins to mutually crosslink, after a conventional heating step, such as a thermization, pasteurization or sterilization, and after fermentation, of a protein-containing product is added to that product a fermented product is obtained which has a consistency which is essentially different than when the enzyme is used before the heating step and the fermentation step. Not only is it surprising that the consistency is essentially different, but also that the protein-crosslinking enzyme according to the invention is used under conditions which are substantially less ideal for the relevant enzyme than the conditions as selected in the known method. In particular, the pH has substantially fallen through the fermentation step.

More in particular, the invention relates to a method for the preparation of a fermented product, wherein before the fermentation step a heating step is carried out, and wherein a step is carried out in which proteins are mutually crosslinked under the influence of a suitable enzyme, characterized in that the enzyme is added after fermentation of the protein-containing starting product and that the enzyme is added after the heating of a protein-containing starting product. Without wishing to be tied down to any scientific theory or to limit the invention, it is assumed that after a fermentation intermolecular protein-protein bonds are formed. Through these intermolecular bonds the functional properties of the proteins and thus the product properties of the products containing these proteins change.

For protein-crosslinking a relatively large number of types of enzymes is eligible in principle, such as protein disulfide isomerase, sulfhydryl oxidases, polyphenol oxidases, lysyl oxidases, peroxidases, TGases, lipoxygenases and glucose oxidases. The above enzymes catalyze different reactions, and depending on the proteins present in the starting products to be fermented and the intended applications a skilled worker can select suitable enzymes. Very suitable are TGase, peroxidase and glocuse oxidase, inter alia because of the availability.

In a preferred embodiment TGase is used as protein-crosslinking enzyme. Two types of TGase are known: animal and microbial. Contrary to animal TGase, the activity of microbially produced TGase is independent of the presence of calcium ions. The enzyme TGase catalyzes specific crosslinking reactions between proteins. More in particular, a glutamine group of a protein molecule is bound - via a covalent bond - with a lysine group of a protein molecule, whereby intermolecular bonds can be formed. In the products in which the present invention can be used, a large fraction of casein, based on the total protein, is usually present; thus, for instance, about 80 wt.% of all protein in milk consists of casein. Caseins form a suitable substrate for TGase. For a further description of the above enzyme, reference is made to the above articles by Lorenzen and Schlimme, and EP-A-0 610 649, as well as the references mentioned in these publications. TGase is commercially available, inter alia from Ajinomoto Co., Inc. Tokyo, Japan.

As starting product, a product is preferably used in which milk proteins are present, and preferably, a fermented dairy product is prepared. More in particular, the invention is directed to obtaining dairy products such as curd cheese, fresh cheese, buttermilk, milk products obtained using *Bifido* and *L. acidophilus* or *L. casei* strains, Ymer and curdled milk, but most preferably yoghurt, both of the stirred type and of the set-type; preferably yoghurt and buttermilk.

When after the fermentation step and after the addition of the enzyme a stirring step is carried out; not only a stirred yoghurt can be obtained, but surprisingly also a set-type yoghurt. This last fact offers possibilities of preparing completely new types of set-type yoghurts, into which, for instance, fruit mass or other pieces of foodstuff can be stirred. Moreover, a set-type yoghurt can be obtained in this manner, without requiring to subject the packaged yoghurt to a treatment in an incubator, which means that the method of preparation for set-type yoghurt can be substantially simplified. The products of the method of the present invention encompass a set-type yoghurt obtained in the method according to the invention wherein after the fermentation step a stirring step is carried out. In corresponding manners products can be made on the basis of buttermilk (cultured milk/fermented milk).

Although the following description particularly gives examples relating to yoghurt, this should not be regarded as limitative. Other fermented milk products, too, can be treated according to the present invention.

As already indicated above, an important aspect of the present invention resides in the addition of the protein-crosslinking enzyme during or after the fermentation step and preferably during or after a next stirring step. Moreover, the present inventors have found that the moment at which the protein-crosslinking enzyme is added after the stirring step while the fermented product cools down from the fermentation temperature, which is usually between 25 and 50°C and conventionally between 30 and 45°C, influences the final result. More in particular, when the enzyme is added quickly after stirring, for instance when the fermented product has not yet cooled further than to 25-30°C, a product with slightly increased viscosity and a smooth consistency can be obtained.

More in detail, as appears from Example 2 below, an incubation at 40°C gives a stirred yoghurt with slightly increased viscosity; gelling does not take place yet. The resulting stirred yoghurt is - in comparison with the stirred yoghurt as obtained according to the product brochure by Ajinomoto - smooth.

When the time span between the addition of the protein-crosslinking enzyme and the stirring step increases and the fermented product is meanwhile cooled to a temperature below 18°C, preferably a temperature between 2 and 15°C, most preferably between 5 and 10°C, gel formation can additionally occur, which gel formation, depending on the nature and the amount of the employed enzyme in the preparation of yoghurt, may even lead to a stirred set-type yoghurt. By adding transglutaminase at a temperature below 18°C, the fermented product, and in particular the fermented dairy product, preferably the yoghurt, takes a higher viscosity coupled to a smooth appearance or even a gel is formed. When a stirred yoghurt is intended, but gel formation seems to occur, stirring can readily be effected a second time, while retaining all the advantages according to the invention. In the case of using TGase, these advantages are obtained in conditions (pH less than 5 and a temperature below 15°C) which, according to the prior art, such as, for instance, the above product brochure, are far from being ideal for the operation of the TGase.

For the rest, this embodiment also renders it possible to prepare a yoghurt with normal viscosity and consistency, at least with a viscosity and a texture or consistency usually coupled to a yoghurt product prepared from milk with a higher protein content. In other words, this embodiment renders it possible to prepare a yoghurt with a lower protein content. Such advantages can also be obtained with other fermented milk products, such as buttermilk. The possibility of using a starting material with a lower protein content particularly has economic advantages, because thus relatively expensive protein can be used for other applications.

As stated, by the method according to the invention a stirred yoghurt can be obtained which has a substantially higher viscosity than such a product prepared from a similar starting product in the manner described in the publications by Lorenzen and Schlimme, EP-A 0 610 649 or the product brochure by Ajinomoto. Besides, the product with increased viscosity also has a smooth consistency.

Finally, the invention relates to the use of a protein-crosslinking enzyme in the preparation of a stirred yoghurt, wherein the enzyme is added during or after the fermentation step, to obtain a yoghurt with a smooth appearance, if required coupled to a higher viscosity.

The activity units for the employed enzymes are determined by methods known in the prior art. Thus, for the determination of the activity units TGase reference is made to the above-discussed European patent application 0 610 649.

The present invention will now be further illustrated with reference to the following, non-limitative examples.

### Example 1 (comparison)

For the preparation of a low-fat yoghurt a yoghurt milk was made from a batch of skim milk powder (total protein content (= total N x 6.38) 39%; non-casein protein (N x 6.38) 8.54%) and standardized to a protein content of 3.75%. Subsequently, the milk was pasteurized for 5 minutes at 85°C. The yoghurt milk was inoculated with a mixture of RR and ISt starter (1:1; obtainable from CSK Food Enrichment, Leeuwarden) in an amount of 0.002% starter concentrate (v/v). Yoghurt preparation took place at a temperature of 32°C. The end point of the acidification of the yoghurt was laid at the moment that the pH had fallen to 4.30 ± 0.05. This point of time was about 16 h +/- 30 min. The preparation of the reference yoghurt was carried out in quadruplicate. In these four cases the acidification stopped after 15 h and 40 min. The yoghurt was then stirred.

For variants where in the preparation of stirred yoghurt transglutaminase was used, 5 or 50 units of transglutaminase per gram of protein were added to the yoghurt milk. The enzyme was added to milk as concentrated solution, and the milk with enzyme was incubated for 60 minutes at 55°C. Subsequently, the milk was pasteurized in the same manner as described above, and yoghurt was prepared in the same manner.

The breaking stress after acidification of the yoghurt gel was determined (Marle, M. van, (1998). Structure and rheological properties of yoghurt gels and stirred yoghurts. Thesis TU Twente). As measure of the viscosity of stirred yoghurt the time of through-flow of yoghurt in a Posthumus funnel was determined at 20°C (Galesloot, T.E., (1958). Investigations concerning the consistency of yoghurt; Netherlands Milk and Dairy Journal, 12, 130-161).

As described by Lorenzen and Schlimme (as mentioned above), a firmer yoghurt gel was obtained after addition of 5 units of transglutaminase per gram of protein to the yoghurt milk. The breaking stress for yoghurt with 5 units of transglutaminase per gram of protein was about twice as high as that of the reference yoghurt. After stirring, the viscosity, measured as time of outflow of the Posthumus funnel, but both of the yoghurt without addition of transglutaminase and of the yoghurt to which 5 units of transglutaminase per gram of protein were added, was about equal; 34 s. The times of outflow of yoghurt with 50 units of transglutaminase per gram of protein could not be determined, because these products were so crumbly that they no longer formed a coherent whole.

From the above it was concluded that addition of transglutaminase to milk did not lead to a smooth stirred yoghurt with increased viscosity.

### Example 2 (invention)

Where in Example 1 TGase was added before the heating step and fermentation, in this example TGase was added after the fermentation.

To low-fat stirred yoghurt (Coberco Zuivel) were added different concentrations of transglutaminase. The enzyme was added as a solution. The yoghurt was then incubated for 2 hours at 40°C.

As measure of the viscosity the time of through-flow of yoghurt in a Posthumus funnel was determined at 2°C.

In Table 1 the time of through-flow of stirred yoghurt is given after incubation with transglutaminase.

**Table 1:**

| *Viscosity (in seconds) of stirred yoghurt after incubation with respectively 2 U, 5 U and 50 U TGase per gram of protein for 2 hours at 40°C, measured with a Posthumus funnel, temperature of the samples = 2°C.* | |
|---|---|
| Sample | Time of through-flow (s) |
| Reference | 49 |
| +2 U/g | 52 |
| +5 U/g | 57 |
| +50 U/g | 51 |

The viscosity of the samples slightly increased. On incubation with 50 units of transglutaminase per gram of protein the viscosity decreased when compared to the other samples. Probably, this is caused by the addition of the enzyme as solution, whereby the yoghurt is diluted.

### Example 3 (invention)

To low-fat stirred yoghurt (Coberco Zuivel) were added different concentrations of transglutaminase. The enzyme was added as a solution In particular, the employed transglutaminase composition also contained lactose (90%) and maltodextrin (9%). The difference in added lactose and maltodextrin with the transglutaminase composition was compensated by adding extra lactose and maltodextrin. The total concentration of lactose and maltodextrin was therefore always equal in all samples.

The yoghurt was then incubated at 4 and 10°C.

As measure of the viscosity the time of through-flow of yoghurt in a Posthumus funnel was determined at 10°C.

On incubation at low temperatures no difference was observed between the viscosity of samples after incubation at 4 or 10°C. In the following experiments an incubation temperature of 10°C was therefore selected.

The results are visualized in Table 2.

Table 2 shows the time of through-flow of stirred yoghurt at 10°C after incubation with transglutaminase. After incubation with 20 units of transglutaminase per gram of protein the viscosity was higher than that of the reference. In the stirred yoghurt with 50 units of TGase per gram of protein a gel was formed between 5 and 11 hours of incubation, which gel was so firm after 1 day that it did not break when tilting. This gel first had to be stirred before it could be poured through the Posthumus funnel.

**Table 2:**

| *Time of through-flow of stirred yoghurt at 10°C after 1 day.* * *gel was formed*, *sample was stirred 8 times before time of through-flow is determined*. | |
|---|---|
| Transglutaminase (U/g protein) | Posthumus time (s) |
| 0 | 22 |
| 5 | 21 |
| 10 | 23 |
| 20 | 28 |
| 50* | 39 |

After stirring the yoghurt sample with 50 U TGase per gram of protein a smooth yoghurt was obtained which was thicker than the reference.

### Example 4 (invention)

In this example it was examined whether the viscosity of the stirred yoghurt increased by incubating the stirred yoghurt with transglutaminase for a longer time. Table 3 shows the viscosity of yoghurt samples as prepared in Example 3 after 1 and after 4 days of storage at 10°C.

**Table 3:**

| *Time of through-flow of stirred yoghurt at 10°C after 1 and 4 days*.* *gel was formed, sample was stirred 8 times before time of through-flow is determined*. | | |
|---|---|---|
| Transglutaminase (U/g protein) | Posthumus time (s) day 1 | Posthumus time (s) day 4 |
| 0 | 22 | 21 |
| 5 | 21 | 25 |
| 10 | 23 | 31* |
| 20 | 28 | 34* |
| 50* | 39* | 43* |

From Table 3 it appears that in the yoghurt samples which were incubated with 10, 20 and 50 units of transglutaminase per gram of protein for 4 days at 10°C a gel was formed. The viscosity after stirring of the yoghurt samples which were incubated with transglutaminase for 4 days was higher than those incubated for 1 day.

### Example 5 (invention)

Table 4 shows the results of the sensory test. When comparing low-fat yoghurt with and without TGase, the yoghurt with 10 U TGase per gram of protein was most appreciated; it gave the pleasantest mouthfeel. The low-fat yoghurt with 10 U TGase tasted less creamy than whole yoghurt.

Of the yoghurt samples the acidity was determined; this is a measure of the sour taste of a product. According as the acidity is higher, the product tastes sourer. Although the samples have about the same acidity, yet the sample with 10 U was judged to be less sour than the low-fat yoghurt without TGase.

**Table 4:**

| *Results of sensory judgment* | | |
|---|---|---|
| Judgment of samples | | |
| Judged product and comments | Acidity | pH |
| Reference - low-fat yoghurt Coberco | | |
| | 122°N | |
| 4.1 | | |
| A low-fat yoghurt Coberco-5U/qp TG | | |
| → sourest | 127°N | |
| 4.2 | | |

| B low-fat yoghurt Coberco-10U/qp TG | | |
|---|---|---|
| → a very little bit creamy | | |
| → pleasant mouthfeel | 126°N | |
| 4.2 | | |
| → less sour than A and Ref. | | |

### Example 6

In this example were compared the viscosities of stirred yoghurt with 3.75% protein (reference yoghurt), a stirred yoghurt with 3.50% protein and a stirred yoghurt with 3.25 protein. These yoghurt samples with decreased protein content were also treated with TGase.

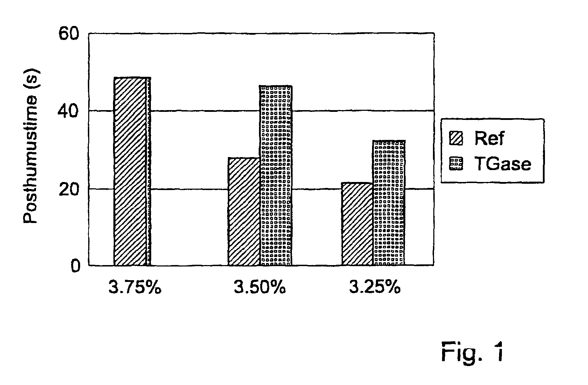

Fig. 1 gives the viscosities of yoghurt samples with and without TGase, of which the samples with TGase were and the samples without TGase were not stirred before the measurement. After incubation for 7 days at 10°C a gel was formed in all three types of yoghurt. After stirring these samples the viscosities were higher than those of the associated reference samples. After incubation with TGase the viscosity of the sample with 3.50% protein is about as high as that of the yoghurt sample with 3.75% protein without TGase. From this it follows that it is possible to make a stirred yoghurt with decreased protein content by using TGase.

### Example 7

In this example it was examined whether the viscosity of buttermilk also increased by incubation with transglutaminase.

To buttermilk (Coberco Zuivel) were added at 7°C two concentrations (12 and 60 u/g protein) of transglutaminase. After 4 days at 7°C a gel is formed in both variants. The gel of the variant with 60 U TGase per gram of protein is firmer than the gel of the variant with 12 U TGase per gram of protein. After stirring with a spoon the buttermilk becomes thin again.

From this example it appears that addition of transglutaminase to buttermilk leads to the formation of a gel at 7°C.

## Claims

1. A method of preparing a fermented product, wherein before the fermentation step a heating step is carried out, and wherein a step is carried out in which proteins are mutually crosslinked under the influence of a suitable enzyme, **characterized in that** the enzyme is added after fermentation of the protein-containing starting product and that the enzyme is added during or after the heating of a protein-containing starting product.

2. A method according to claim 1, wherein as starting product a product is used in which milk proteins are present.

3. A method according to claim 1 or 2, wherein after the fermentation step and after the addition of the enzyme a stirring step is carried out.

4. A method according to any one of the preceding claims, wherein a yoghurt and yoghurt product, a buttermilk or buttermilk product is prepared.

5. A method according to any one of the preceding claims, wherein as enzyme transglutaminase is used.

6. A method according to claim 5, wherein for the addition of the enzyme the fermented product is cooled to a temperature below 18°C, preferably between 2 and 15°C, most preferably between 5 and 10°C.

7. The use of a protein-crosslinking enzyme in the preparation of a stirred yoghurt, wherein the enzyme is added after the fermentation step, to obtain a yoghurt with increased viscosity and/or a smooth appearance.

## Patentansprüche

1. Verfahren zur Herstellung eines fermentierten Produkts, worin vor dem Fermentationsschritt ein Wärmeschritt ausgeführt wird, und worin ein Schritt ausgeführt wird, bei dem Proteine unter dem Einfluss eines geeigneten Enzyms gegenseitig vernetzt werden, **dadurch gekennzeichnet, dass** das Enzym nach Fermentation des proteinhaltigen Ausgangsprodukts zugegeben wird und dass das Enzym während oder nach dem Erwärmen eines proteinhaltigen Ausgangsprodukts zugegeben wird.

2. Verfahren gemäss Anspruch 1, worin als Ausgangsprodukt ein Produkt verwendet wird, in dem Milchproteine vorhanden sind.

3. Verfahren gemäss Anspruch 1 oder 2, worin nach dem Fermentationsschritt und nach Zugabe des Enzyms ein Rührschritt ausgeführt wird.

4. Verfahren gemäss einem der vorangehenden Ansprüche, worin Joghurt und ein Joghurtprodukt, Buttermilch oder ein Buttermilchprodukt hergestellt werden.

5. Verfahren gemäss einem der vorangehenden Ansprüche, worin als Enzym Transglutaminase verwendet wird.

6. Verfahren gemäss Anspruch 5, worin zur Addition des Enzyms das fermentierte Produkt auf eine Temperatur unter 18°C, vorzugsweise zwischen 2 und 15°C, am bevorzugtesten zwischen 5 und 10°C, gekühlt wird.

7. Verwendung eines Protein-vernetzenden Enzyms bei der Herstellung eines gerührten Joghurts, worin das Enzym nach dem Fermentationsschritt zum Erhalt eines Joghurts mit erhöhter Viskosität und/oder einem glatten Erscheinungsbild zugegeben wird.

## Revendications

1. Procédé pour préparer un produit fermenté, dans lequel, avant l'étape de fermentation, une étape de chauffage est réalisée, et dans lequel une étape dans laquelle les protéines sont mutuellement réticulées sous l'effet d'une enzyme appropriée est réalisée, **caractérisée en ce que** l'enzyme est ajoutée après la fermentation d'un produit de départ contenant une protéine et **en ce que** l'enzyme est ajoutée pendant ou après le chauffage du produit de départ contenant une protéine.

2. Procédé selon la revendication 1, dans lequel le produit de départ utilisé est un produit dans lequel des protéines de lait sont présentes.

3. Procédé selon la revendication 1 ou 2, dans lequel une étape d'agitation est réalisée après l'étape de fermentation et après l'addition de l'enzyme.

4. Procédé selon l'une quelconque des revendications précédentes, dans lequel un yogourt ou un produit à base de yogourt, un babeurre ou un produit à base de babeurre est préparé.

5. Procédé selon l'une quelconque des revendications précédentes, dans lequel l'enzyme utilisée est la transglutaminase.

6. Procédé selon la revendication 5, dans lequel le produit fermenté est refroidi à une température inférieure à 18°C, de préférence entre 2 et 15°C, plus préférentiellement entre 5 et 10°C pour l'addition de l'enzyme.

7. Utilisation d'une protéine réticulée par une enzyme dans la préparation d'un yogourt brassé, dans lequel l'enzyme est ajoutée après l'étape de fermentation pour obtenir un yogourt avec une viscosité augmentée et/ou une apparence veloutée.
